# FASCICULE DE BREVET EUROPEEN

(11) **EP 4 208 626 B1**
(45) Date de publication et mention de la délivrance du brevet: **23.10.2024**
(21) Numéro de dépôt: 21770057.4
(22) Date de dépôt: 26.08.2021
(51) Int. Cl.: F01D 9/04, F01D 11/00

(54) **TURBINE POUR TURBOMACHINE COMPRENANT DES CLINQUANTS DE PROTECTION THERMIQUE**
TURBINE EINER TURBOMASCHINE MIT VERSCHLEISS- UND THERMOSCHUTZEINLAGE
TURBINE OF A TURBOMACHINE COMPRISING WEAR LINERS FOR THERMAL PROTECTION

(30) Priorité: 04.09.2020 FR 2009012
(43) Date de publication de la demande: 12.07.2023
(73) Titulaire: SAFRAN AIRCRAFT ENGINES, 75015 Paris (FR)
(72) Inventeur: BOISNAULT, Franck Davy, 77550 MOISSY-CRAMAYEL (FR); LUNEAU, Florent Pierre Antoine, 77550 MOISSY-CRAMAYEL (FR); THOMAS, Axel Sylvain Loïc, 77550 MOISSY-CRAMAYEL (FR)
(74) Mandataire: Regimbeau
(86) Numéro de dépôt international: PCT/FR2021/051489
(87) Numéro de publication internationale: WO 2022/049338

(56) Documents cités:
- EP-A1- 2 368 016
- EP-A2- 2 434 107
- EP-B1- 2 368 016
- FR-A1- 2 967 730
- FR-A1- 2 986 836

## Description

### DOMAINE DE L'INVENTION

L'invention concerne les turbomachines, en particulier les turboréacteurs et les turbopropulseurs d'aéronef.

### ETAT DE LA TECHNIQUE

On connaît du document FR-3 084 103 une turbomachine formant un turboréacteur d'avion. La turbomachine est à double corps et comporte une soufflante, un compresseur basse pression, un compresseur haute pression, une chambre de combustion, une turbine haute pression et une turbine basse pression. La turbine basse pression comprend plusieurs étages successifs comprenant chacun un distributeur aval et une roue à aubes amont. Par convention, dans la présente demande, les termes " amont " et " aval " sont définis par rapport au sens de circulation des gaz dans la turbine. Chaque distributeur comprend deux plateformes annulaires coaxiales radialement interne et externe, entre lesquelles s'étendent des aubes. Le distributeur est accroché à un carter externe de la turbine. La plateforme externe comprend à son extrémité amont deux rebords qui s'étendent de part et d'autre d'une gorge annulaire ouverte vers l'amont qui forment un becquet doté d'une pince. L'ensemble des distributeurs forme la partie fixe du moteur appelée "stator".

Les différentes roues sont reliées à un arbre d'entraînement de façon à former le rotor de la turbine. Chaque roue tourne à l'intérieur d'un anneau également accroché au carter externe. Cet anneau est formé de secteurs d'anneau qui portent chacun intérieurement un bloc de matériau abradable capable de coopérer à frottement avec des léchettes annulaires disposées à la périphérie des aubes du rotor. Un crochet annulaire aval du carter, formant un rail, et un bord aval des secteurs d'anneaux sont maintenus dans le becquet.

Des clinquants anti-usure sont disposés entre le crochet annulaire et le distributeur. Les clinquants ont chacun une forme profilée suivant une direction circonférentielle à l'axe et s'étendent en succession suivant cette direction. Chaque clinquant est logé dans le becquet en étant interposé entre le becquet d'une part et le crochet et le bord de l'anneau d'autre part. Ces clinquants ont une fonction de protection thermique et d'anti-usure (il s'agit de limiter l'usure entre le distributeur et le crochet du carter).

En effet, l'évolution des moteurs civils a eu pour conséquence l'augmentation de leurs températures de fonctionnement pour améliorer leur performance. Or les besoins de précision sur les jeux en sommet des roues nécessitent une bonne maîtrise des déplacements des crochets du carter assurant la fixation des distributeurs. Pour cela, on cherche à faire en sorte que les crochets (ou rails) de carter restent relativement froids et donc à les isoler autant que possible des becquets des distributeurs relativement chauds et dont les températures sont proches de la température de la veine aérodynamique. Les clinquants permettent de limiter la conduction thermique entre les crochets de carter et les becquets de distributeur. De plus, il s'agit de limiter la température du becquet du distributeur en le protégeant du flux d'air qui passe entre les secteurs d'anneaux.

Toutefois, un problème de chevauchement mutuel des clinquants en direction circonférentielle peut se poser. Il peut apparaitre lors de leur montage dans la turbomachine, en particulier s'ils sont montés en aveugle ou rapidement recouverts par une autre pièce. Ce problème peut aussi se poser en fonctionnement en raison des vibrations ou des variations thermiques au sein de la turbomachine.

Le document EP-2 368 016 divulgue une turbine conforme au préambule de la revendication 1.

D'autres agencements sont divulguées dans les documents FR-2 967 730, EP-2 434 107 et FR-2 986 836.

Un but de l'invention est d'éviter le chevauchement mutuel des clinquants.

### EXPOSE DE L'INVENTION

A cet effet, on prévoit selon l'invention une turbine pour turbomachine selon la revendication 1.

Ainsi les protubérances peuvent venir en appui les unes contre les autres pour empêcher le chevauchement des clinquants lors du montage ou lors du fonctionnement. Ici, les clinquants peuvent donc venir en appui directement les uns contre les autres.

On peut prévoir que chaque clinquant comprend des reliefs ou des creux configurés pour limiter le déplacement du clinquant selon une direction circonférentielle.

On peut prévoir que les protubérances de chaque clinquant sont au moins au nombre de deux, lesdites protubérances de chaque clinquant s'étendant en saillie d'une extrémité circonférentielle du clinquant.

On peut prévoir aussi que, sur chaque clinquant, les protubérances sont au moins au nombre de deux sur au moins un bord adjacent à un autre des clinquants.

Dans un mode de réalisation, sur chaque clinquant, au moins l'une des protubérances s'étend en direction radiale.

On peut prévoir que les protubérances sont arrondies.

On peut prévoir que l'anneau comporte des doigts traversant le becquet du distributeur, chaque clinquant présentant au moins un évidement apte à venir en appui circonférentiellement contre l'un des doigts.

Les doigts bloquent l'anneau en rotation circonférentielle par rapport au distributeur. Cette fois, les clinquants prennent appui contre l'anneau. On tire parti de la fonction d'anti-rotation déjà associée aux doigts pour empêcher le chevauchement des clinquants.

On peut prévoir que l'évidement s'étend à partir d'une extrémité circonférentielle du clinquant.

Il est ainsi facile à réaliser, notamment par découpe.

Avantageusement, chaque clinquant comprend deux évidements, chaque évidement s'étendant à une extrémité circonférentielle opposée du clinquant.

On peut prévoir que l'anneau est formé de secteurs d'anneau disposés en succession suivant la direction circonférentielle et séparés deux à deux par des zones de jonction circonférentielle des secteurs d'anneau, les clinquants étant également deux à deux séparés circonférentiellement les uns des autres par des zones de jonction des clinquants, les zones de jonction des clinquants étant décalées en direction circonférentielle par rapport aux zones de jonction circonférentielles des secteurs d'anneau.

Ainsi, on limite davantage les fuites de gaz entre les secteurs d'anneau en augmentant encore le trajet que doivent parcourir les gaz pour les traverser.

On prévoit également selon l'invention une turbomachine telle qu'un turbopropulseur ou un turboréacteur d'aéronef, comprenant au moins une turbine selon l'invention.

### DESCRIPTION DES FIGURES

Nous allons maintenant présenter deux modes de réalisation de l'invention à titre d'exemples non-limitatifs à l'appui des dessins sur lesquels :
- la figure 1 est une demi-vue générale en coupe axiale d'une turbomachine dans un mode de réalisation de l'invention et une vue agrandie d'un détail de la demi-vue générale,
- la figure 2 est une vue partielle en perspective des clinquants de la turbomachine de la figure 1,
- la figure 3 est une vue partielle en perspective de la turbomachine dans ce mode de réalisation avec une vue agrandie d'un détail,
- les figures 4, 5 et 6 sont des vues analogues aux précédentes montrant un agencement n'appartenant pas à l'invention, et
- la figure 7 est une vue partielle en perspective illustrant la turbomachine de cet agencement lors d'une étape de son montage.

### DESCRIPTION DETAILLEE

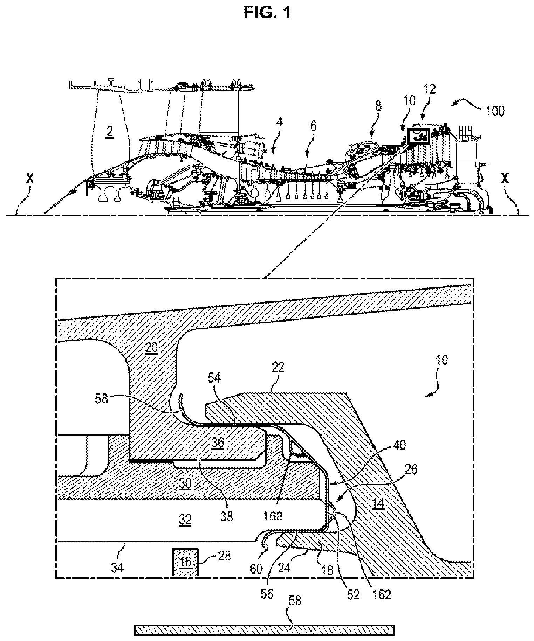

Nous allons présenter en référence aux figures 1 à 3 un mode de réalisation de l'invention.

Il s'agit d'un turboréacteur d'avion 100 formant une turbomachine à double corps qui comporte d'amont en aval une soufflante 2, un compresseur basse pression 4, un compresseur haute pression 6, une chambre de combustion 8, une turbine haute pression 10 et une turbine basse pression 12. La turbomachine présente un axe principal X-X qui sert d'axe de rotation du rotor par rapport au stator.

La turbine basse-pression 12 comprend plusieurs étages successifs comprenant chacun un distributeur aval 14 et une roue à aubes amont 16. L'ensemble des distributeurs 14 appartient à la partie fixe du moteur formant le stator qui comprend également un carter externe 20.

Chaque distributeur 14 comprend une plate-forme annulaire radialement interne et une plate-forme annulaire radialement externe 18 coaxiales, entre lesquelles s'étendent des aubes radiales ou sensiblement radiales par référence à l'axe X-X, régulièrement espacées sur toute la circonférence des plateformes. Le distributeur 14 est accroché radialement vers l'extérieur au carter externe 20.

Pour cela, la plateforme annulaire externe 18 comprend à son extrémité amont un rebord (ou doigt) radialement externe 22 et un rebord (ou doigt) radialement interne 24 qui s'étendent tous les deux vers l'amont. Ces deux rebords définissent entre eux une gorge annulaire 26 ouverte vers l'amont. Ils forment un becquet doté d'une pince présentant ainsi deux mors ou mâchoires.

Chaque roue à aubes 16 comprend un disque portant à sa périphérie externe des aubes 28 radiales ou sensiblement radiales, les disques des différentes roues étant reliés coaxialement les uns aux autres et à un arbre d'entraînement par des moyens appropriés, de façon à former le rotor de la turbine.

La roue à aubes 16 tourne à l'intérieur d'un anneau 30. Cet anneau est formé de plusieurs secteurs d'anneau 32, qui s'étendent en cercle suivant la direction circonférentielle à l'axe, et qui sont agencés bout à bout dans la même direction. Ils portent chacun intérieurement un bloc de matériau abradable 34. Ces blocs sont capables de coopérer à frottement avec des léchettes annulaires disposées à la périphérie radialement externe de chaque aube 28 du rotor.

Les secteurs d'anneau sont accrochés au carter externe 20. Pour cela, chaque secteur d'anneau 32 comprend à son extrémité aval un secteur de gorge annulaire ouvert radialement vers l'extérieur. Les secteurs de gorge forment ensemble une gorge annulaire 36 dans laquelle est engagé un crochet aval 38 du carter externe, assurant ainsi la fixation de l'anneau 30 sur le carter. Le crochet présente la forme profilée d'un rail annulaire.

Le crochet 38 et les extrémités aval des secteurs d'anneau 32 sont maintenus selon une direction radiale (c'est-à-dire de bas en haut et de haut en bas sur la figure 1) par les rebords interne 24 et externe 26 de la plateforme externe 18. Cette pince presse le crochet 38 et l'anneau 30 suivant la direction radiale et les maintient dans la gorge 26 du becquet. Elle monte l'anneau contre le crochet de carter.

La turbomachine comprend aussi des clinquants anti-usure 40. Les clinquants 40 ont chacun une forme en goulotte, profilée suivant la direction circonférentielle à l'axe X-X. Ils s'étendent en succession suivant cette direction. De la sorte, tout comme les secteurs d'anneau 32, ils forment un ensemble à symétrie de révolution autour de l'axe.

Les clinquants sont ici identiques entre eux. Comme on peut le voir sur la figure 1, chaque clinquant 40 est en forme de goulotte et comprend un fond plan 52 perpendiculaire à l'axe X-X, une paroi cylindrique radialement externe 54 et une paroi cylindrique radialement interne 56. Il est disposé dans la gorge 26 de façon que sa paroi externe 54 soit au contact de la face radialement intérieure du doigt externe 22 et que sa paroi interne 56 soit au contact de la face radialement extérieure du doigt interne 24. Chaque clinquant a ainsi, en section radiale, comme illustré à la figure 1, une forme générale de « U » dissymétrique, tout comme celle de la gorge 26 du becquet. Chaque clinquant 40 s'étend dans le becquet 22, 24 en étant interposé entre celui-ci d'une part et le crochet 38 et le bord de l'anneau 30 d'autre part. Chaque clinquant s'étend radialement sur toute la pince du becquet, à savoir à la fois sur le doigt externe 22 de la pince et sur son doigt interne 24.

Le clinquant 40 présente une extrémité radialement externe 58 recourbée vers l'extérieur de la turbine, de sorte qu'elle s'étend devant la face amont du doigt radialement externe 22. Il présente aussi une extrémité radialement interne 60 recourbée vers l'intérieur de la turbine et qui s'étend en regard de la face amont du doigt radialement interne 24. Ces extrémités 58, 60 assurent le blocage axial du clinquant. Ainsi, les deux extrémités libres de la section du clinquant forment deux lèvres respectives qui sortent de la gorge et qui sont recourbées en directions opposées l'une à l'autre, l'une en direction de l'axe et l'autre en direction opposée à l'axe.

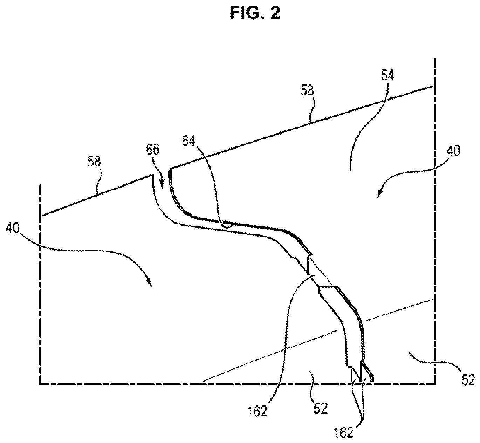

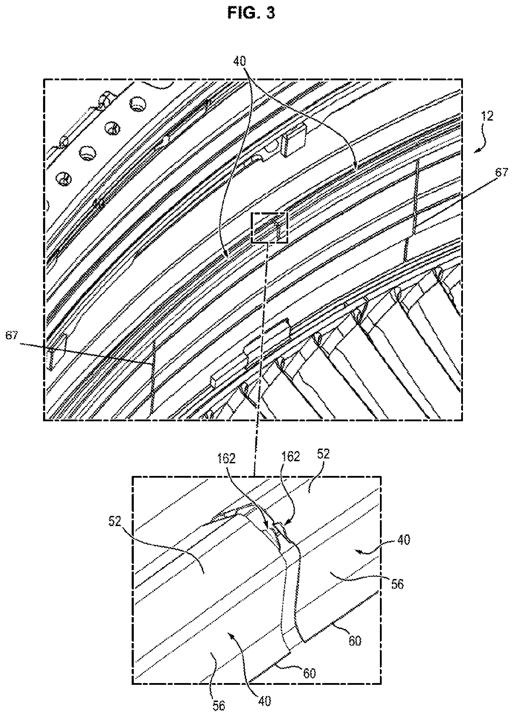

Comme on le voit sur les figures 2 et 3, la turbine comprend des butées 162 à l'encontre d'un déplacement des clinquants 40 suivant la direction circonférentielle les uns par rapport aux autres.

Dans ce mode de réalisation, ce sont sur chaque clinquant 40 des protubérances ou oreilles 162 qui forment les butées et sont disposées de sorte que les protubérances de deux clinquants circonférentiellement adjacents s'étendent en regard l'une de l'autre. Les protubérances 162 s'étendent en saillie de chaque bord d'extrémité longitudinale 64 du clinquant faisant face au clinquant 40 circonférentiellement adjacent. Les protubérances ont ici une forme en demi-disque mais d'autres formes telles qu'une forme rectangulaire ou carré seraient également envisageables. Les protubérances 162 sont ici repliées pour s'étendre dans un plan incliné par rapport au plan local du clinquant et par rapport à la direction circonférentielle. Chaque protubérance 162 s'étend donc en saillie d'une face du clinquant.

Dans le présent exemple, sur chaque clinquant 40, les protubérances 162 sont au nombre de deux sur chaque bord 64 adjacent à un autre des clinquants. De plus, en l'espèce, sur chaque bord, l'une des protubérances 162 est orientée vers l'axe et vers l'amont, de sorte qu'elle est radiale, et l'autre est orientée vers l'aval. Les premières s'étendent à partir d'une paroi du clinquant située entre le fond 52 et la paroi externe 54. Les secondes s'étendent à partir du fond 52.

Chaque clinquant 40 est symétrique par rapport à un plan radial traversant le centre du clinquant. De la sorte, la protubérance 162 du clinquant orientée vers l'axe se trouve directement en regard d'une protubérance du clinquant adjacent ayant la même orientation. Elle peut donc venir en butée contre celle-ci pour empêcher le chevauchement mutuel des deux clinquants adjacents, au montage ou en fonctionnement. Il en est de même de façon analogue pour la protubérance orientée en direction de l'aval.

Lors du montage, les butées 162 forment des moyens de mise en position circonférentielle des clinquants les uns par rapport aux autres. En fonctionnement, elles empêchent la rotation de chaque clinquant 40 autour de l'axe de la turbine par rapport aux autres clinquants.

On a vu que l'anneau 30 était formé de secteurs 32 disposés en succession suivant la direction circonférentielle. Ils sont séparés les uns des autres par des zones de jonction 67 des secteurs. Les clinquants 40 sont pareillement séparés les uns des autres par des zones de jonction 66 des clinquants. Ces dernières sont décalées en direction circonférentielle par rapport aux zones de jonction 67 des secteurs. En d'autres termes, les jonctions des deux groupes ne sont pas en coïncidence. De la sorte, on augmente les pertes de charge lors du passage des gaz entre les secteurs d'anneau 32 puis entre les clinquants 40 pour une meilleure isolation.

Dans le présent exemple, chaque clinquant 40 est réalisé dans une tôle fine, par exemple d'épaisseur inférieure à 1 mm, ce qui lui confère une certaine élasticité. Il peut être fabriqué dans un alliage particulièrement résistant à l'usure et aux contraintes thermiques, tel qu'un alliage à base de cobalt et/ou de nickel.

Grâce aux clinquants, les crochets ou rails 38 de carter restent relativement froids et sont isolés autant que possible des becquets des distributeurs dont les températures sont proches de la température de la veine aérodynamique. Les clinquants 40 permettent de limiter la conduction thermique entre ces pièces. De plus, ils limitent la température du becquet du distributeur en le protégeant du flux d'air qui passe entre les secteurs d'anneaux. Le fond 52 du clinquant 40 constitue en effet une barrière d'étanchéité pour le gaz qui ne peut pas s'écouler entre l'extrémité aval de l'anneau d'étanchéité et la gorge 26 du distributeur.

Ce mode de réalisation convient notamment dans les configurations où l'anneau 30 ne dispose d'aucun moyen d'anti-rotation coopérant directement avec le distributeur en vis-à-vis.

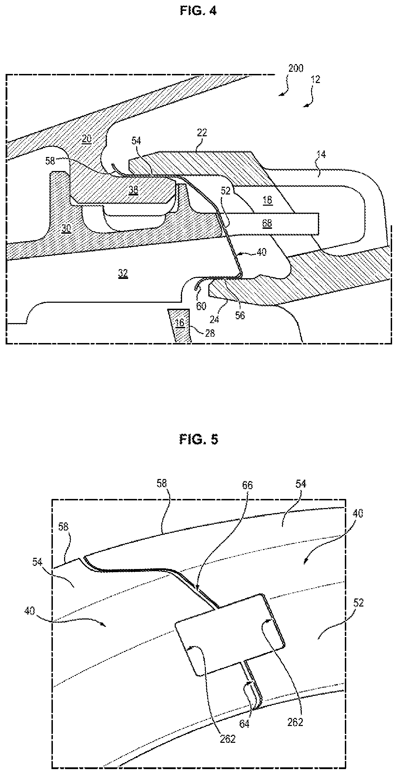

Nous allons maintenant présenter en référence aux figures 4 à 7 un agencement non-couvert par l'invention. Les caractéristiques de la turbomachine 200 qui ne sont pas à nouveau décrites sont identiques à celles du mode de réalisation précédent.

Cette fois, l'anneau 30 comporte des doigts 68 pénétrant dans des logements du distributeur 14 suivant la direction axiale, vers l'aval, et venant si besoin en appui contre le distributeur suivant la direction circonférentielle. Les doigts 68 sont répartis sur l'anneau suivant la direction circonférentielle. Ils ont par exemple une forme profilée, aplatie suivant la direction radiale et une section de forme rectangulaire dans un plan perpendiculaire à l'axe. Mais d'autres formes sont envisageables.

Chaque clinquant 40 présente deux évidements 262 aptes chacun à venir en appui contre l'un des doigts 68 suivant la direction circonférentielle. Dans cet exemple, chaque évidement 262 s'étend à partir d'un bord d'extrémité longitudinale 64 respectif du clinquant situé en regard d'un bord analogue 64 du clinquant adjacent. Le nombre d'évidements 262 est de deux sur chaque clinquant, les évidements s'étendant dans des bords opposés du clinquant. Les évidements sont ici prévus dans le fond 52 du clinquant. À nouveau, chaque clinquant est symétrique par rapport à un plan radial à l'axe traversant son centre.

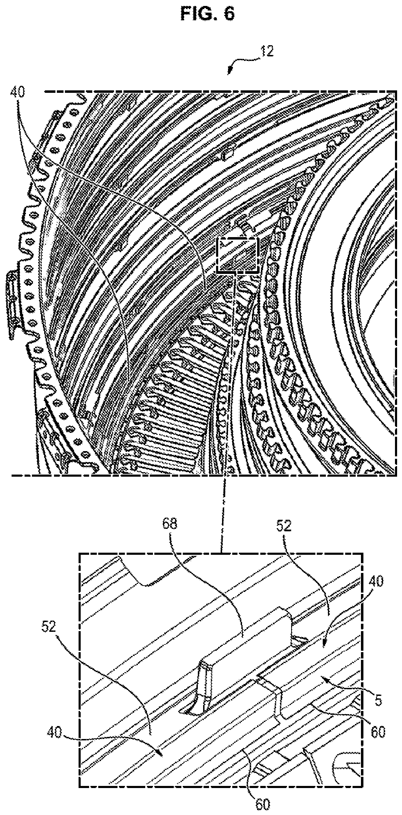

Comment le voit sur la figure 5, les deux évidements ou encoches 262 des clinquants circonférentiellement adjacents forment ensemble un logement rectangulaire permettant le passage du doigt 68 respectif de l'anneau, comme illustré à la figure 6. Le doigt et les évidements assurent le bon positionnement des clinquants lors de leur montage dans la turbomachine. Lors du fonctionnement, les doigts empêchent le chevauchement dans la direction circonférentielle des clinquants en formant une butée pour ceux-ci suivant la direction circonférentielle.

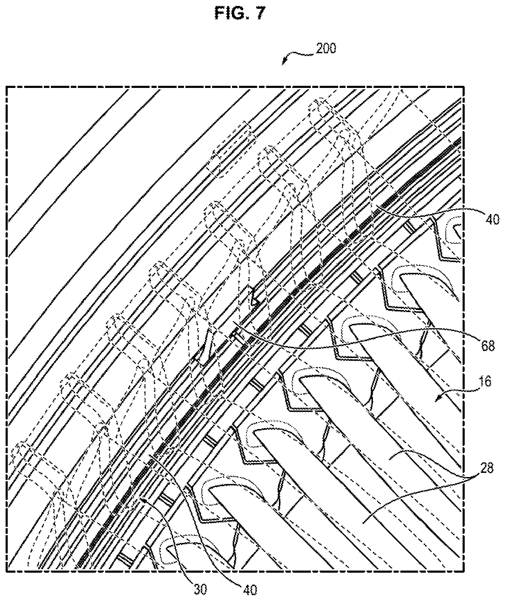

Dans les deux turbines, le montage peut avoir lieu comme suit. On suppose que le distributeur 14 est lui aussi divisé en secteurs qui se succèdent en direction circonférentielle et dont le nombre est égal au nombre de clinquants 40. On prévoit que les clinquants sont associés aux secteurs de distributeur respectifs. On peut donc monter chaque clinquant en contact avec le secteur de distributeur correspondant, puis installer séparément chaque sous-ensemble ainsi constitué dans la turbomachine. Les clinquants assurent alors un bon positionnement mutuel des secteurs de distributeur en direction circonférentielle. L'invention permet de ne pas avoir de chevauchement dans la direction circonférentielle ni d'endommagement si ces sous-ensembles sont assemblés dans la turbomachine en aveugle, c'est-à-dire dans une configuration où le distributeur vient masquer à la vue de l'opérateur l'anneau 30 déjà installé et le clinquant 40 qui n'est pas visible lors de sa pose. C'est le cas, pour l'agencement non-couvert par l'invention, dans la configuration de la figure 7 sur laquelle le distributeur 14 est représenté en transparence afin de montrer les clinquants 40 et l'anneau 30.

La fonction anti-rotation des clinquants 40 est également utile en fonctionnement afin d'éviter les chevauchements dans la direction circonférentielle sous l'effet des légers déplacements tangentiels des distributeurs.

Bien entendu, on pourra apporter à l'invention de nombreuses modifications sans sortir du cadre de celle-ci.

La turbomachine peut comprendre d'autres moyens d'isolation thermique et d'étanchéité, en plus des clinquants.

Les butées empêchant le chevauchement des clinquants en direction circonférentielle peuvent prendre d'autres formes que celles présentées ci-dessus. On peut varier leur nombre et leur disposition sur chaque clinquant.

Le mode de réalisation et l'agencement qui ont été décrits en détail plus haut peuvent être combinés.

## Revendications

1. Turbine (12) pour turbomachine (100 ; 200) s'étendant autour d'un axe principal (X-X) et comprenant :
- un carter (4) comprenant un crochet annulaire (38),
- une roue (16) montée mobile,
- un anneau (30) s'étendant en regard de la roue (16) suivant une direction radiale de l'axe principal (X-X),
- un distributeur (14) comportant une aube pourvue d'une plateforme (18), la plateforme (18) étant prolongée radialement vers l'extérieur par un becquet (22, 24), le becquet (22, 24) étant monté radialement sur le crochet (38) du carter (4), et
- des clinquants (40) ayant chacun une forme profilée en goulotte suivant une direction circonférentielle à l'axe, les clinquants (40) s'étendant en succession suivant la direction circonférentielle, chaque clinquant (40) s'étendant entre le becquet (22, 24) et le crochet (38), la turbine comprenant des butées (162 ; 262) à l'encontre d'un déplacement des clinquants (40) suivant la direction circonférentielle,
**caractérisée en ce que** chaque clinquant (40) comprend une protubérance (162) disposée de sorte à s'étendre circonférentiellement en regard d'une autre protubérance (162) d'un autre clinquant (40) circonférentiellement adjacent.

2. Turbine selon la revendication précédente dans laquelle chaque clinquant comprend des reliefs (162) ou des creux (262) configurés pour limiter le déplacement du clinquant selon une direction circonférentielle.

3. Turbine selon l'une quelconque des revendications précédentes dans laquelle les protubérances (162) de chaque clinquant (40) sont au moins au nombre de deux, les protubérances (162) de chaque clinquant (40) s'étendant en saillie d'une extrémité circonférentielle du clinquant (40).

4. Turbine selon l'une quelconque des revendications précédentes dans laquelle, sur chaque clinquant (40), au moins l'une des protubérances (162) s'étend en direction radiale.

5. Turbine selon l'une quelconque des revendications précédentes dans laquelle les protubérances (162) sont arrondies.

6. Turbine selon l'une quelconque des revendications précédentes dans laquelle l'anneau (30) comporte des doigts (68) traversant le becquet (22, 24) du distributeur (14), chaque clinquant (40) présentant au moins un évidement (262) apte à venir en appui circonférentiellement contre l'un des doigts (68).

7. Turbine selon la revendication 6 dans laquelle l'évidement (262) s'étend à partir d'une extrémité circonférentielle (64) du clinquant (40).

8. Turbine selon l'une quelconque des revendications 6 ou 7 dans laquelle chaque clinquant (40) comprend deux évidements (262), chaque évidement (262) s'étendant à une extrémité circonférentielle opposée (64) du clinquant (40).

9. Turbine selon l'une quelconque des revendications précédentes dans laquelle l'anneau (30) est formé de secteurs d'anneau disposés en succession suivant la direction circonférentielle et séparés deux à deux par des zones de jonction circonférentielle (67) des secteurs d'anneau, les clinquants (40) étant également deux à deux séparés circonférentiellement les uns des autres par des zones (66) de jonction des clinquants (40), les zones (66) de jonction des clinquants (40) étant décalées en direction circonférentielle par rapport aux zones de jonction circonférentielles (67) des secteurs d'anneau.

10. Turbomachine telle qu'un turbopropulseur ou un turboréacteur (100 ; 200) d'aéronef, comprenant au moins une turbine (12) selon au moins l'une quelconque des revendications précédentes.

## Patentansprüche

1. Turbine (12) für eine Turbomaschine (100; 200), die sich um eine Hauptachse (X-X) erstreckt und umfasst:
- ein Gehäuse (4), das einen ringförmigen Haken (38) umfasst,
- ein beweglich angebrachtes Rad (16),
- einen Ring (30), der sich dem Rad (16) zugewandt gemäß einer radialen Richtung der Hauptachse (X-X) erstreckt,
- einen Verteiler (14), der eine Schaufel umfasst, die mit einer Plattform (18) versehen ist, wobei die Plattform (18) radial nach außen durch eine Anlage (22, 24) verlängert ist, wobei die Anlage (22, 24) radial an dem Haken (38) des Gehäuses (4) angebracht ist, und
- Lamellen (40), die jeweils eine rinnenförmige Profilform gemäß einer Umfangsrichtung zur Achse aufweisen, wobei sich die Lamellen (40) aufeinanderfolgend gemäß der Umfangsrichtung erstrecken, wobei sich jede Lamelle (40) zwischen der Anlage (22, 24) und dem Haken (38) erstreckt, wobei die Turbine Anschläge (162; 262) entgegen einer Verlagerung der Lamellen (40) gemäß der Umfangsrichtung umfasst,
**dadurch gekennzeichnet, dass** jede Lamelle (40) einen Vorsprung (162) umfasst, der so angeordnet ist, dass er sich umfangmäßig einem anderen Vorsprung (162) einer anderen, umfangmäßig benachbarten Lamelle (40) zugewandt erstreckt.

2. Turbine nach vorhergehendem Anspruch, wobei jede Lamelle Erhebungen (162) oder Vertiefungen (262) umfasst, die so ausgelegt sind, dass sie die Verlagerung der Lamelle gemäß einer Umfangsrichtung begrenzen.

3. Turbine nach einem der vorhergehenden Ansprüche, wobei die Vorsprünge (162) jeder Lamelle (40) mindestens zwei sind, wobei sich die Vorsprünge (162) jeder Lamelle (40) von einem Umfangsende der Lamelle (40) vorspringend erstrecken.

4. Turbine nach einem der vorhergehenden Ansprüche, wobei sich auf jeder Lamelle (40) mindestens einer der Vorsprünge (162) in radialer Richtung erstreckt.

5. Turbine nach einem der vorhergehenden Ansprüche, wobei die Vorsprünge (162) abgerundet sind.

6. Turbine nach einem der vorhergehenden Ansprüche, wobei der Ring (30) Finger (68) aufweist, die die Anlage (22, 24) des Verteilers (14) durchqueren, wobei jede Lamelle (40) mindestens eine Aussparung (262) aufweist, die geeignet ist, umfangmäßig an einem der Finger (68) in Anlage zu kommen.

7. Turbine nach Anspruch 6, wobei sich die Aussparung (262) ab einem Umfangsende (64) der Lamelle (40) erstreckt.

8. Turbine nach einem der Ansprüche 6 oder 7, wobei jede Lamelle (40) zwei Aussparungen (262) umfasst, wobei sich jede Aussparung (262) an einem umfangmäßig gegenüberliegenden Ende (64) de Lamelle (40) erstreckt.

9. Turbine nach einem der vorhergehenden Ansprüche, wobei der Ring (30) aus Ringsektoren gebildet ist, die gemäß der Umfangsrichtung hintereinander angeordnet sind und jeweils paarweise durch Umfangsverbindungsbereiche (67) der Ringsektoren voneinander getrennt sind, wobei die Lamellen (40) ebenfalls paarweise umfangmäßig durch Verbindungsbereiche (66) der Lamellen (40) voneinander getrennt sind, wobei die Verbindungsbereiche (66) der Lamellen (40) in Umfangsrichtung relativ zu den Umfangsverbindungsbereichen (67) der Ringsektoren versetzt sind.

10. Turbomaschine wie ein Turboprop- oder Turbostrahltriebwerk (100; 200) eines Luftfahrzeugs, umfassend mindestens eine Turbine (12) nach mindestens einem der vorhergehenden Ansprüche.

## Claims

1. A turbine (12) for a turbomachine (100; 200) extending about a main axis (X-X) and comprising:
- a casing (4) comprising an annular hook (38),
- a movably mounted wheel (16),
- a ring (30) extending facing the wheel (16) along a radial direction of the main axis (X-X),
- a nozzle (14) including a blade provided with a platform (18), the platform (18) being extended radially outwards by a spoiler (22, 24), the spoiler (22, 24) being radially mounted on the hook (38) of the casing (4), and
- foils (40) each having a channel-like profiled shape along a direction circumferential to the axis, the foils (40) extending successively along the circumferential direction, each foil (40) extending between the spoiler (22 , 24) and the hook (38), the turbine comprising stops (162; 262) to prevent a displacement of the foils (40) along the circumferential direction,
**characterised in that** each foil (40) comprises a protrusion (162) disposed so as to extend circumferentially facing another protrusion (162) of another circumferentially adjacent foil (40).

2. The turbine according to the preceding claim, wherein each foil comprises reliefs (162) or cavities (262) configured to limit the displacement of the foil along a circumferential direction.

3. The turbine according to any one of the preceding claims, wherein the protrusions (162) of each foil (40) are at least two in number, the protrusions (162) of each foil (40) protruding from a circumferential end of the foil (40).

4. The turbine according to any one of the preceding claims, wherein, on each foil (40), at least one of the protrusions (162) extends in the radial direction.

5. The turbine according to any one of the preceding claims, wherein the protrusions (162) are rounded.

6. The turbine according to any one of the preceding claims, wherein the ring (30) includes fingers (68) passing through the spoiler (22, 24) of the nozzle (14), each foil (40) having at least one recess (262) able to circumferentially bear against one of the fingers (68).

7. The turbine according to claim 6 wherein the recess (262) extends from a circumferential end (64) of the foil (40).

8. The turbine according to any one of claims 6 or 7 wherein each foil (40) comprises two recesses (262), each recess (262) extending to an opposite circumferential end (64) of the foil (40).

9. The turbine according to any one of the preceding claims, wherein the ring (30) is formed of ring sectors disposed successively along the circumferential direction and separated in pairs by circumferential junction areas (67) of the ring sectors, the foils (40) also being separated in pairs circumferentially from each other by junction areas (66) of the foils (40), the junction areas (66) of the foils (40) being offset in the circumferential direction relative to the circumferential junction areas (67) of the ring sectors.

10. A turbomachine such as an aircraft turboprop or turbojet engine (100; 200), comprising at least one turbine (12) according to at least any one of the preceding claims.
